# EUROPEAN PATENT APPLICATION

(11) **EP 4 478 627 A1**
(43) Date of publication of application: **18.12.2024**
(21) Application number: 23765709.3
(22) Date of filing: 09.02.2023
(51) Int. Cl.: H04B 7/185

(54) **POSITIONING METHOD, APPARATUS, AND COMPUTER-READABLE STORAGE MEDIUM**

(30) Priority: 07.03.2022 CN 202210223432
(71) Applicant: Huawei Technologies Co., Ltd., Shenzhen, Guangdong 518129 (CN)
(72) Inventor: WANG, Yu, Shenzhen, Guangdong 518129 (CN); CHEN, Ying, Shenzhen, Guangdong 518129 (CN); KONG, Chuili, Shenzhen, Guangdong 518129 (CN); QIAO, Yunfei, Shenzhen, Guangdong 518129 (CN); YU, Tianhang, Shenzhen, Guangdong 518129 (CN)
(74) Representative: Maiwald GmbH
(86) International application number: PCT/CN2023/075147
(87) International publication number: WO 2023/169131

(57) **Abstract**

This application provides a positioning method and apparatus, and a computer-readable storage medium. The method includes: receiving location information from a terminal device; sending a first request to a location and mobility management function (location and mobility management function, LMF) network element, where the first request is for authenticating whether a location corresponding to the location information is a legal location; receiving, from the LMF network element, first information indicating that authentication on the location corresponding to the location information is completed; and sending, to the terminal device, second information indicating that the location corresponding to the location information is a legal location/an illegal location. According to the technical solutions provided in this application, precision of positioning the terminal device by a satellite can be improved.

## Description

This application claims priority to Chinese Patent Application No. 202210223432.3, filed with the China National Intellectual Property Administration on March 7, 2022 and entitled "POSITIONING METHOD AND APPARATUS, AND COMPUTER-READABLE STORAGE MEDIUM", which is incorporated herein by reference in its entirety.

### TECHNICAL FIELD

This application relates to the field of wireless communication technologies, and in particular, to a positioning method and apparatus, and a computer-readable storage medium.

### BACKGROUND

A non-terrestrial network (non-terrestrial network, NTN) (such as satellite communication) has significant advantages such as global coverage, long-distance transmission, flexible networking, easy deployment, and no geographical condition limitation, and has been widely applied to a plurality of fields such as maritime communication, positioning and navigation, risk resistance and disaster relief, scientific experiment, video broadcasting, and earth observation.

With continuous development of a mobile communication system, positioning user equipment (user equipment, UE) has become an important part of a wireless technology. A time difference of arrival (time difference of arrival, TDoA)/frequency difference of arrival (frequency difference of arrival, FDoA) positioning technology is usually used. To be specific, a location of the UE is obtained through cumulative time differential estimation by measuring time of arrival (time of arrival, ToA) and/or directions of arrival (direction of arrival, DoA) at a plurality of time points. In some scenarios, for example, in a geostationary earth orbit (geostationary earth orbit, GEO) scenario, a satellite is relatively stationary to the ground. When UE movement is not considered, ToA at a plurality of time points is basically the same, and a single GEO beam has a large coverage area. Consequently, precision of positioning the UE by the satellite is poor. Therefore, how to improve precision of positioning the UE by the satellite is an urgent problem to be resolved.

### SUMMARY

Embodiments of this application provide a positioning method and apparatus, and a computer-readable storage medium, to improve precision of positioning a terminal device by a satellite.

According to a first aspect, this application provides a positioning method. The method may be applied to a first core network element, an apparatus (for example, a chip, a chip system, or a circuit) in a first core network element, or an apparatus that can be used together with a first core network element. The first core network element may be an access and mobility management function (access and mobility management function, AMF) network element, or may be a session management function (session management function, SMF) network element. The method may include: receiving location information from a terminal device; sending a first request to a location and mobility management function (location and mobility management function, LMF) network element, where the first request is for requesting to authenticate whether a location corresponding to the location information is a legal location; receiving, from the LMF network element, first information indicating that authentication on the location corresponding to the location information is completed; and sending, to the terminal device, second information indicating that the location corresponding to the location information is a legal location/an illegal location.

In the solution provided in this application, after receiving location information of a terminal side, a network side performs location authentication on a location corresponding to the location information. Specifically, the first core network element on the network side may receive the location information from the terminal device, and send, to the LMF network element on the network side, the first request for requesting whether the location corresponding to the location information is a legal location. After receiving an authentication complete response message from the LMF network element, the first core network element sends, to the terminal device, a message indicating whether the location of the terminal device is a legal location. Different from a case in which the network side does not perform location authentication on the location corresponding to the location information after receiving the location information from the terminal side, in this embodiment of this application, the network side performs location authentication on the terminal device, so that a probability that the terminal device reports a fake location can be reduced, and precision of positioning the terminal device by a satellite can be improved.

It may be understood that the network side described in this embodiment of this application may include an access network and a core network, and the core network includes the first core network element and the LMF network element. The first core network element may be an SMF network element or an AMF network element. Unified descriptions are provided herein in this specification, and details are not described below again.

In a possible implementation, the sending, to the terminal device, second information indicating that the location corresponding to the location information is a legal location includes: when an error between a first location and the location corresponding to the location information is less than a threshold, sending, to the terminal device, the second information indicating that the location corresponding to the location information is a legal location, where the first location is a location of the terminal device that is determined when an access network of the terminal device is an NTN.

In the solution provided in this application, the first core network element determines a type of the access network of the terminal device, and when the access network of the terminal device is the NTN, the LMF network element may determine that the location of the terminal device is the first location. When the error between the first location and the location corresponding to the location information is less than the threshold, the first core network element sends, to the terminal device, a message indicating that the location corresponding to the location information is a legal location. The network side performs location authentication on the terminal device, so that the probability that the terminal device reports the fake location can be reduced, and precision of positioning the terminal device by the satellite can be improved.

In a possible implementation, the sending, to the terminal device, second information indicating that the location corresponding to the location information is an illegal location includes: when an error between a first location and the location corresponding to the location information is greater than or equal to a threshold, sending, to the terminal device, the second information indicating that the location corresponding to the location information is an illegal location, where the first location is a location of the terminal device that is determined when an access network of the terminal device is a non-terrestrial network NTN; and terminating a current service of the terminal device.

In the solution provided in this application, the first core network element determines a type of the access network of the terminal device, and when the access network of the terminal device is the NTN, the LMF network element may determine that the location of the terminal device is the first location. When the error between the first location and the location corresponding to the location information is greater than or equal to the threshold, the first core network element sends, to the terminal device, a message indicating that the location corresponding to the location information is an illegal location. The network side performs location authentication on the terminal device, so that the probability that the terminal device reports the fake location can be reduced, and precision of positioning the terminal device by the satellite can be improved.

In a possible implementation, the location information is carried in one or more of radio resource control (radio resource control, RRC) setup complete information, an initial user equipment (user equipment, UE) message, or a UE capability message.

The terminal device interacts with the network side to complete procedures such as random access, initial context setup, UE capability reporting, security mode authentication, and RRC reconfiguration. In the solution provided in this application, UE needs to report location information (for example, location and/or precision information) to the network side. The location information may be included in one or more of the RRC setup complete information (RRC Setup Complete), initial UE information (Initial UE Message), or the UE capability message (UE Capability Information). The location information is reported to the network side by using existing signaling. This can reduce signaling overheads.

In a possible implementation, the first request is triggered by an initial context setup complete message.

In the solutions provided in this application, the first request is for requesting to authenticate whether the location corresponding to the location information is a legal location. The first core network element may be triggered, by using the existing initial context setup complete message (Initial Context Setup Response), to start a location authentication procedure. If authentication succeeds, a subsequent procedure may continue to be performed. The first core network element is triggered, by using existing signaling, to start the location authentication procedure, so that the signaling overheads can be reduced.

After the terminal side and the network side complete RRC configuration-related information exchange, the terminal device has entered a connected mode. In this case, the location authentication procedure is started. The network side may select a narrow beam (to be specific, a non-synchronization signal and physical broadcast channel (Physical Broadcast Channel, PBCH) block (Synchronization Signal and PBCH block, SSB) beam) to perform location authentication on the terminal device. Flexible beamforming may be used for the narrow beam, and a beam shape is transparent to the terminal device, so that reliability of the location authentication is effectively improved. That a beam shape is transparent to the terminal device may be understood as that the terminal device does not know a beam on which the network side performs receiving. In this way, the terminal device cannot forge the location information, and the reliability of the location authentication can be improved.

In a possible implementation, the first request is triggered by the initial UE message.

In the solutions provided in this application, the first request is for requesting to authenticate whether the location corresponding to the location information is a legal location. The first core network element may be triggered, by using the existing initial UE message (Initial UE Message), to start a location authentication procedure. If authentication succeeds, a subsequent procedure may continue to be performed. The first core network element is triggered, by using existing signaling, to start the location authentication procedure, so that the signaling overheads can be reduced.

Before the terminal side and the network side complete initial context setup interaction, the location authentication procedure is triggered to be started, so that the location corresponding to the location information reported by the terminal device can be quickly authenticated. If the authentication fails, the subsequent related procedure may be terminated. This not only can effectively improve the reliability of the location authentication, but also can reduce the signaling overheads and a delay in the location authentication procedure.

In a possible implementation, the method further includes: sending configuration information to the terminal device, where the configuration information is for configuring a plurality of pieces of time and/or a plurality of bandwidth parts (Bandwidth Parts, BWPs); and receiving a plurality of reference signals from the terminal device, where the plurality of reference signals are sent by the terminal device based on the configuration information.

A procedure of positioning the first location is improved. Different from reuse of an existing positioning method (such as a TDoA, an angle of arrival (Angle of Arrival, AOA), and an enhanced cell identifier (enhanced cell ID, ECID)) in new radio (new radio, NR) or reuse of an NTN specific positioning method, in the procedure of positioning the first location in the solution provided in this application, the network side (the first core network element or the LMF network element) sends a plurality of pieces of configuration information to the terminal side at a time, so that the terminal device sends the plurality of reference signals on resources corresponding to the plurality of pieces of configuration information, and then, the network side estimates, based on related information such as quality, distances, and angles of the plurality of received reference signals, the location of the terminal device by using a flexible beam. Based on the information about the plurality of reference signals, the location of the terminal device is estimated by using the beam that is transparent to a UE side, so that reliability of estimating the location of the terminal device can be improved.

In a possible implementation, time-frequency resources, patterns, or periodicities corresponding to the plurality of pieces of time are different.

In the solution provided in this application, the configuration information sent by the network side (the first core network element or the LMF network element) to the terminal side at a time may include the plurality of pieces of time, and the time-frequency resources, the patterns, or the periodicities corresponding to the plurality of pieces of time are different. The terminal device may send the plurality of reference signals based on the time-frequency resources, the patterns, the periodicities, and the like corresponding to the plurality of pieces of time, so that the network side can estimate the location of the terminal device based on the information about the plurality of reference signals, and estimation of the location of the terminal device can be more accurate.

In a possible implementation, time-frequency resources, patterns, or periodicities corresponding to the plurality of BWPs are different.

In the solution provided in this application, the configuration information sent by the network side (the first core network element or the LMF network element) to the terminal side at a time may include the plurality of BWPs, and the time-frequency resources, the patterns, or the periodicities corresponding to the plurality of BWPs are different. The terminal device may send the plurality of reference signals based on the time-frequency resources, the patterns, the periodicities, and the like corresponding to the plurality of BWPs, so that the network side can estimate the location of the terminal device based on the information about the plurality of reference signals, and estimation of the location of the terminal device can be more accurate.

In a possible implementation, the configuration information further includes satellite ephemeris information.

In the solution provided in this application, the configuration information sent by the network side (the first core network element or the LMF network element) to the terminal side at a time may further carry the satellite ephemeris information (for example, a satellite number, a cell number, or satellite location information). The satellite ephemeris information may be for generating an uplink beam direction of a very small aperture terminal (Very Small Aperture Terminal, VSAT) terminal. The network side may receive the plurality of reference signals in a flexible beam manner or a multi-satellite coordination beam hopping manner, and estimate, based on the related information such as the quality, the distances, and the angles of the plurality of received reference signals, the location of the terminal device by using the flexible beam. The satellite ephemeris information is added to the configuration information, to assist the terminal device in uplink beam forming and reference signal sending, and improve the reliability of estimating the location of the terminal device by the network side.

According to a second aspect, this application provides a positioning method. The method may be applied to a terminal device, an apparatus (for example, a chip, a chip system, or a circuit) in a terminal device, or an apparatus that can be used together with a terminal device. The method may include: sending location information to a first core network element; and receiving, from the first core network element, second information indicating that a location corresponding to the location information is a legal location/an illegal location.

In the solution provided in this application, a terminal side may send location information to a network side, and receive, from the network side, a message indicating that a location corresponding to the location information is a legal location/an illegal location. After receiving the location information of the terminal side, the network side may perform location authentication on the location corresponding to the location information. Different from a case in which the network side does not perform location authentication on the location corresponding to the location information after receiving the location information from the terminal side, in this embodiment of this application, the network side performs location authentication on the terminal device, so that a probability that the terminal device reports a fake location can be reduced, and precision of positioning the terminal device by a satellite can be improved.

It may be understood that the second aspect may be executed by the terminal device, and specific content of the second aspect corresponds to the content of the first aspect. For corresponding features of the second aspect and beneficial effects achieved by the second aspect, refer to the descriptions of the first aspect. To avoid repetition, detailed descriptions are properly omitted herein.

In a possible implementation, the location information is carried in one or more of RRC setup complete information, an initial UE message, or a UE capability message.

In a possible implementation, the method further includes: receiving configuration information from the first core network element, where the configuration information is for configuring a plurality of pieces of time and/or a plurality of BWPs; and sending a plurality of reference signals to the first core network element based on the configuration information.

In a possible implementation, time-frequency resources, patterns, or periodicities corresponding to the plurality of pieces of time are different.

In a possible implementation, time-frequency resources, patterns, or periodicities corresponding to the plurality of BWPs are different.

In a possible implementation, the configuration information further includes satellite ephemeris information.

According to a third aspect, a positioning method is provided. The method may be applied to an LMF network element, an apparatus (for example, a chip, a chip system, or a circuit) in an LMF network element, or an apparatus that can be used together with an LMF network element. The method may include: receiving a first request from a first core network element, where the first request is for requesting to authenticate whether a location corresponding to location information is a legal location, and the location information is from a terminal device; and sending, to the first core network element, first information indicating that authentication on the location corresponding to the location information is completed.

In the solution provided in this application, the LMF network element may receive the location information from the terminal device, authenticate, based on the first request from the first core network element, whether the location corresponding to the location information is a legal location, and send, to the first core network element, a response message indicating that the authentication on the location corresponding to the location information is completed. In this embodiment of this application, an LMFA network element on a network side performs location authentication on the terminal device, so that a probability that the terminal device reports a fake location can be reduced, and precision of positioning the terminal device by a satellite can be improved.

It may be understood that the third aspect may be executed by the LMF network element, and specific content of the second aspect corresponds to the content of the first aspect. For corresponding features of the second aspect and beneficial effects achieved by the second aspect, refer to the descriptions of the first aspect. To avoid repetition, detailed descriptions are properly omitted herein.

In a possible implementation, the location information is carried in one or more of RRC setup complete information, an initial UE message, or a UE capability message.

In a possible implementation, the first request is triggered by an initial context setup complete message.

In a possible implementation, the first request is triggered by the initial UE message.

In a possible implementation, the method further includes: receiving a plurality of reference signals from the terminal device, where the plurality of reference signals are sent by the terminal device based on configuration information; and when an access network of the terminal device is an NTN, determining a first location based on at least one of quality, distances, and angles of the plurality of reference signals.

According to a fourth aspect, a positioning apparatus is provided. The positioning apparatus may be a first core network element, an apparatus (for example, a chip, a chip system, or a circuit) in a first core network element, or an apparatus that can be used together with a first core network element.

In a possible implementation, the positioning apparatus may include modules or units that are in one-to-one correspondence with the methods/operations/steps/actions described in the first aspect. The module or unit may be a hardware circuit, may be software, or may be implemented by a hardware circuit in combination with software.

In a possible implementation, the positioning apparatus includes:
a receiving unit, configured to receive location information from a terminal device;
a sending unit, configured to send a first request to an LMF network element, where the first request is for authenticating whether a location corresponding to the location information is a legal location.

The receiving unit is further configured to receive, from the LMF network element, first information indicating that authentication on the location corresponding to the location information is completed.

The sending unit is further configured to send, to the terminal device, second information indicating that the location corresponding to the location information is a legal location/an illegal location.

In a possible implementation, the sending unit is specifically configured to:
when an error between a first location and the location corresponding to the location information is less than a threshold, send, to the terminal device, the second information indicating that the location corresponding to the location information is a legal location, where the first location is a location of the terminal device that is determined when an access network of the terminal device is a non-terrestrial network NTN.

In a possible implementation, the sending unit is specifically configured to:
when an error between a first location and the location corresponding to the location information is greater than or equal to a threshold, send, to the terminal device, the second information indicating that the location corresponding to the location information is an illegal location, where the first location is a location of the terminal device that is determined when an access network of the terminal device is a non-terrestrial network NTN; and terminate a current service of the terminal device.

In a possible implementation, the location information is carried in one or more of RRC setup complete information, an initial UE message, or a UE capability message.

In a possible implementation, the first request is triggered by an initial context setup complete message.

In a possible implementation, the first request is triggered by the initial UE message.

In a possible implementation, the sending unit is further configured to send configuration information to the terminal device, where the configuration information is for configuring a plurality of pieces of time and/or a plurality of BWPs; and
the receiving unit is further configured to receive a plurality of reference signals from the terminal device, where the plurality of reference signals are sent by the terminal device based on the configuration information.

In a possible implementation, time-frequency resources, patterns, or periodicities corresponding to the plurality of pieces of time are different.

In a possible implementation, time-frequency resources, patterns, or periodicities corresponding to the plurality of BWPs are different.

In a possible implementation, the configuration information further includes satellite ephemeris information.

According to a fifth aspect, a positioning apparatus is provided. The positioning apparatus may be a terminal device, an apparatus (for example, a chip, a chip system, or a circuit) in a terminal device, or an apparatus that can be used together with a terminal device.

In a possible implementation, the positioning apparatus may include modules or units that are in one-to-one correspondence with the methods/operations/steps/actions described in the second aspect. The module or unit may be a hardware circuit, may be software, or may be implemented by a hardware circuit in combination with software.

In a possible implementation, the positioning apparatus may include:
a sending unit, configured to send location information to a first core network element; and
a receiving unit, configured to receive, from the first core network element, second information indicating that a location corresponding to the location information is a legal location/an illegal location.

In a possible implementation, the location information is carried in one or more of RRC setup complete information, an initial UE message, or a UE capability message.

In a possible implementation, the receiving unit is further configured to receive configuration information from the first core network element, where the configuration information is for configuring a plurality of pieces of time and/or a plurality of BWPs; and
the sending unit is further configured to send a plurality of reference signals to the first core network element based on the configuration information.

In a possible implementation, time-frequency resources, patterns, or periodicities corresponding to the plurality of pieces of time are different.

In a possible implementation, time-frequency resources, patterns, or periodicities corresponding to the plurality of BWPs are different.

In a possible implementation, the configuration information further includes satellite ephemeris information.

According to a sixth aspect, a positioning apparatus is provided. The positioning apparatus may be an LMF network element, an apparatus (for example, a chip, a chip system, or a circuit) in an LMF network element, or an apparatus that can be used together with an LMF network element.

In a possible implementation, the positioning apparatus may include modules or units that are in one-to-one correspondence with the methods/operations/steps/actions described in the third aspect. The module or unit may be a hardware circuit, may be software, or may be implemented by a hardware circuit in combination with software.

In a possible implementation, the positioning apparatus may include:
a receiving unit, configured to receive a first request from a first core network element, where the first request is for requesting to authenticate whether a location corresponding to location information is a legal location, and the location information is from a terminal device; and
a sending unit, configured to send, to the first core network element, first information indicating that authentication on the location corresponding to the location information is completed.

In a possible implementation, the location information is carried in one or more of RRC setup complete information, an initial UE message, or a UE capability message.

In a possible implementation, the first request is triggered by an initial context setup complete message.

In a possible implementation, the first request is triggered by the initial UE message.

In a possible implementation, the receiving unit is further configured to receive a plurality of reference signals from the terminal device, where the plurality of reference signals are sent by the terminal device based on configuration information.

The positioning apparatus further includes:
a processing unit, configured to: when an access network of the terminal device is an NTN, determine a first location based on at least one of quality, distances, and angles of the plurality of reference signals.

According to a seventh aspect, a positioning apparatus is provided. The positioning apparatus may be a first core network element, an apparatus (for example, a chip, a chip system, or a circuit) in a first core network element, or an apparatus that can be used together with a first core network element. The positioning apparatus may include a processor, configured to execute a computer program. When the computer program is executed, the positioning apparatus is enabled to perform the positioning method provided in any one of the first aspect or the implementations of the first aspect.

In a possible implementation, the positioning apparatus further includes a memory, and the memory is configured to store the foregoing computer program. Optionally, the processor and the memory are integrated together. Optionally, the memory is located outside the positioning apparatus.

In a possible implementation, the positioning apparatus further includes a communication interface. The communication interface is used by the positioning apparatus to communicate with another device, for example, send or receive data and/or a signal. For example, the communication interface may be a transceiver, a circuit, a bus, a module, or another type of communication interface.

According to an eighth aspect, a positioning apparatus is provided. The positioning apparatus may be a terminal device, an apparatus (for example, a chip, a chip system, or a circuit) in a terminal device, or an apparatus that can be used together with a terminal device. The positioning apparatus may include a processor, configured to execute a computer program. When the computer program is executed, the positioning apparatus is enabled to perform the positioning method provided in any one of the second aspect or the implementations of the second aspect.

In a possible implementation, the positioning apparatus further includes a memory, and the memory is configured to store the foregoing computer program. Optionally, the processor and the memory are integrated together. Optionally, the memory is located outside the positioning apparatus.

In a possible implementation, the positioning apparatus further includes a communication interface. The communication interface is used by the positioning apparatus to communicate with another device, for example, send or receive data and/or a signal. For example, the communication interface may be a transceiver, a circuit, a bus, a module, or another type of communication interface.

According to a ninth aspect, a positioning apparatus is provided. The positioning apparatus may be an LMF network element, an apparatus (for example, a chip, a chip system, or a circuit) in an LMF network element, or an apparatus that can be used together with an LMF network element. The positioning apparatus may include a processor, configured to execute a computer program. When the computer program is executed, the positioning apparatus is enabled to perform the positioning method provided in any one of the third aspect or the implementations of the third aspect.

In a possible implementation, the positioning apparatus further includes a memory, and the memory is configured to store the foregoing computer program. Optionally, the processor and the memory are integrated together. Optionally, the memory is located outside the positioning apparatus.

In a possible implementation, the positioning apparatus further includes a communication interface. The communication interface is used by the positioning apparatus to communicate with another device, for example, send or receive data and/or a signal. For example, the communication interface may be a transceiver, a circuit, a bus, a module, or another type of communication interface.

According to a tenth aspect, a positioning system is provided. The positioning system includes the positioning apparatus in the seventh aspect, the positioning apparatus in the eighth aspect, and the positioning apparatus in the ninth aspect. Optionally, the positioning apparatus includes the positioning apparatus in the fourth aspect, the positioning apparatus in the fifth aspect, and the positioning apparatus in the sixth aspect.

According to an eleventh aspect, a computer-readable storage medium is provided. The computer-readable storage medium stores a computer program or computer instructions, and when the computer program or the computer instructions are run, the positioning method provided in the foregoing aspects is implemented.

According to a twelfth aspect, a computer program product including executable instructions is further provided. When the computer program product runs on user equipment, some or all steps of the method in any one of the first aspect and the possible implementations of the first aspect, any one of the second aspect and the possible implementations of the second aspect, and any one of the third aspect and the possible implementations of the third aspect are performed.

According to a thirteenth aspect, a chip system is provided. The chip system includes a processor, and may further include a memory, configured to implement the method in any one of the first aspect and the possible implementations of the first aspect, any one of the second aspect and the possible implementations of the second aspect, and any one of the third aspect and the possible implementations of the third aspect. The chip system may include a chip, or may include a chip and another discrete component.

### BRIEF DESCRIPTION OF DRAWINGS

To describe the technical solutions in embodiments of this application more clearly, the following briefly describes the accompanying drawings for describing embodiments. Apparently, the accompanying drawings in the following descriptions show some embodiments of this application, and persons of ordinary skill in the art may still derive another drawing from these accompanying drawings without creative efforts.
FIG. 1 is a diagram of a cellular PRS design pattern;
FIG. 2 is a diagram of a network architecture of a satellite communication system according to an embodiment of this application;
FIG. 3 is an interaction diagram of a positioning method according to an embodiment of this application;
FIG. 4 is an interaction diagram of a communication method according to an embodiment of this application;
FIG. 5 is an interaction diagram of another communication method according to an embodiment of this application;
FIG. 6 is a diagram of a beam shape before single-satellite adjustment according to an embodiment of this application;
FIG. 7 is a diagram of a beam shape after single-satellite adjustment according to an embodiment of this application;
FIG. 8 is a diagram of multi-satellite beam coverage according to an embodiment of this application;
FIG. 9 is a diagram of a structure of a positioning apparatus according to an embodiment of this application;
FIG. 10 is a diagram of a structure of another positioning apparatus according to an embodiment of this application;
FIG. 11 is a diagram of a structure of still another positioning apparatus according to an embodiment of this application;
FIG. 12 is a diagram of a structure of still yet another positioning apparatus according to an embodiment of this application; and
FIG. 13 is a diagram of a structure of a terminal device according to an embodiment of this application.

### DESCRIPTION OF EMBODIMENTS

To make persons skilled in the art understand the solutions in this application better, the following clearly and completely describes the technical solutions in embodiments of this application with reference to the accompanying drawings in embodiments of this application. It is clear that the described embodiments are merely a part rather than all of embodiments of this application. All other embodiments obtained by persons of ordinary skill in the art based on embodiments of this application without creative efforts shall fall within the protection scope of this application.

The following first provides definitions of technical terms that may occur in embodiments of this application. Terms used in embodiments of this application are only used to explain specific embodiments of this application, but are not intended to limit this application.

### (1) Next-generation satellite communication

A non-terrestrial network (non-terrestrial network, NTN), such as satellite communication, has significant advantages such as global coverage, long-distance transmission, flexible networking, easy deployment, and no geographical condition limitation, and has been widely applied to a plurality of fields such as maritime communication, positioning and navigation, risk resistance and disaster relief, scientific experiment, video broadcasting, and earth observation. A 5th generation (5th Generation, 5G) ground mobile communication network, a satellite network, and the like are integrated, to gather strengths and overcome a weakness, jointly form a sea-land-air-space-ground integrated communication network with seamless global coverage, and meet a plurality of ubiquitous service requirements of users.

A next-generation satellite network (including a low earth orbit (Low Earth Orbit, LEO) satellite, a medium earth orbit (medium earth orbit, MEO) satellite, a geostationary earth orbit (geostationary earth orbit, GEO) satellite, and the like) generally has a trend of being ultra-dense and heterogeneous. First, a scale of the satellite network develops from 66 satellites in the Iridium constellation to 720 satellites in the Oneweb constellation, and finally extended to more than 12,000 satellites in the Stalink (Stalink) ultra-dense low-orbit satellite constellation. Second, the satellite network has a heterogeneous characteristic, and develops from a conventional single-layer communication network to a multi-layer communication network. A communication satellite network tends to have complex and diversified functions, and is gradually compatible with and supports functions such as navigation/positioning enhancement, earth observation, and on-orbit processing of multi-dimensional information.

### (2) Positioning requirement and technology

In a new radio (new radio, NR) 16 version, a higher requirement is imposed on positioning of a terrestrial cellular network. For example, for 80% indoor user equipment (user equipment, UE), a horizontal positioning error and a vertical positioning error need to be less than 3 m (meter), and an end-to-end delay needs to be less than 1s (second). For a self-driving service, high positioning precision at a submeter level (for example, 10 cm) needs to be achieved. A typical representative technology of positioning of a cellular network is a time difference of arrival (Time difference of Arrival, TDoA) positioning technology. In the TDoA technology, time differences of arrival of reference signals (for example, positioning reference signals (positioning reference signals, PRSs) signals) of a plurality of base stations are measured, so that high positioning precision can be achieved, and the TDoA technology has become one of main candidate technologies for NR.

In addition, in a satellite positioning technology, a dedicated global navigation satellite system (Global Navigation Satellite System, GNSS) satellite constellation is laid, each satellite periodically broadcasts a reference signal formed based on a clock of the satellite, and the UE obtains a location of the UE by receiving reference signals (usually by using code division multiple access) of a plurality of satellites and calculating pseudo-ranges.

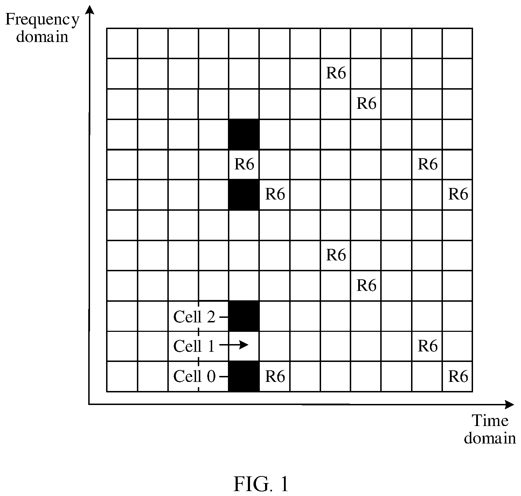

For an NR positioning technology, to some extent, a cellular independent positioning technology (for example, the TDoA technology) needs to rely on a specific reference signal, for example, a positioning reference signal (positioning reference signal, PRS). The reference signal is broadcast on demand on a configured time-frequency resource by using a specific multiplexing pattern. Particularly, a PRS signal in a current cellular network uses a Gold sequence whose length is 31, a PRS sending periodicity is 160 ms, 320 ms, 640 ms, or 1280 ms, and a 6-color multiplexing mode is used in frequency domain. FIG. 1 is a diagram of a cellular PRS design pattern. As shown in FIG. 1, different cells transmit PRSs on different time-frequency resource blocks. For example, a cell 0 (cell 0), a cell 1 (cell 1), and a cell 2 (cell 2) respectively transmit PRSs on time-frequency resource blocks marked in different colors, and the cell 1 transmits a PRS on a time-frequency resource block marked by R6. In addition, to avoid inter-cell interference, a PRS signal is transmitted in a low-interference subframe. To be specific, the subframe does not carry data of UE, and a muting (muting) mechanism may be used for PRS signals of different cells, to further reduce the interference and ensure reliable transmission of the PRS signals of a plurality of cells. In addition, in a high-frequency scenario, a multi-station coordination positioning technology based on an angle of arrival/angle of departure (Angle of Arrival, AoA/Angle of Departure, AoD) may also be considered. However, for typical communication network deployment, the UE is usually only within coverage of a single satellite or two satellites, and it is difficult to establish a premise of multi-satellite (usually four or more satellites) coordination positioning.

For an NTN positioning technology, an existing NTN network oriented to a communication scenario usually uses a time difference/frequency difference (TDoA/FDoA) positioning technology. To be specific, a location of the UE is obtained through cumulative time differential estimation by measuring ToA and DoAs at a plurality of time points. Positioning precision of this method can usually reach about 10 km, and an end-to-end positioning delay can reach 30s. However, the method is not applicable to a GEO scenario. Because a GEO is usually relatively stationary to the ground, when UE movement is not considered, ToA at a plurality of time points is basically the same. A single GEO beam has an extremely large coverage area, usually reaching hundreds of kilometers. Positioning precision of a single GEO satellite is poor.

To better understand a positioning method and apparatus, and a computer-readable storage medium that are provided in embodiments of this application, the following first describes a network architecture used in embodiments of this application.

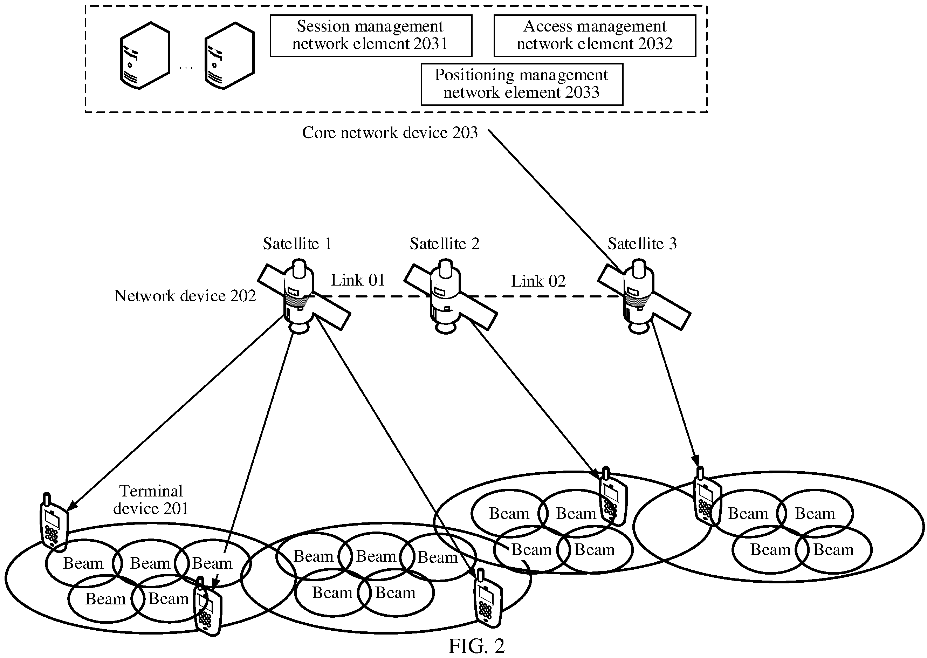

FIG. 2 is a diagram of a network architecture of a satellite communication system according to an embodiment of this application. As shown in FIG. 2, the satellite communication system may include a terminal device 201, a network device 202, and a core network device 203. The terminal device 201 may be connected to the network device 202 in a wireless manner, and may access the core network device 203 via the network device 202. The terminal device 201 may be at a fixed location, or may be movable.

The technical solutions of this application may be applied to a non-terrestrial network (non-terrestrial network, NTN) system such as a satellite communication system, a high-altitude platform station (high-altitude platform station, FLAPS) communication system, or an uncrewed aerial vehicle, for example, an integrated communication and navigation (integrated communication and navigation, IcaN) system, a global navigation satellite system (global navigation satellite system, GNSS), and an ultra-dense low-orbit satellite communication system. The satellite communication system may be integrated with a conventional mobile communication system. For example, the mobile communication system may be a 4th generation (4th generation, 4G) communication system (for example, a long term evolution (long term evolution, LTE) system), a worldwide interoperability for microwave access (worldwide interoperability for microwave access, WiMAX) communication system, a 5th generation (5th generation, 5G) communication system (for example, a new radio (new radio, NR) system), and a future mobile communication system.

The terminal device 201 may also be referred to as a user terminal, a mobile station, or the like. The terminal device mentioned in this embodiment of this application includes various handheld devices, vehicle-mounted devices, wearable devices, or computing devices that have a wireless communication function, or other processing devices connected to a wireless modem, and may be specifically user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device may alternatively be a satellite phone, a cellular phone, a smartphone, a wireless data card, a wireless modem, a machine type communication device, a cordless phone, a session initiation protocol (session initiation protocol, SIP) phone, a wireless local loop (wireless local loop, WLL) station, a personal digital processing (personal digital assistant, PDA), a handheld device having a wireless communication function, a computing device or another processing device connected to a wireless modem, a vehicle-mounted device or wearable device, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a terminal device in a 5G network or a future communication network, or the like.

The network device 202 includes a satellite 1, a satellite 2, and a satellite 3. Each satellite may provide a communication service, a navigation service, a positioning service, and the like for the terminal device by using a plurality of beams. The satellite in this scenario is an LEO satellite, and the satellite is connected to a ground station device. The network device 202 may include one or more satellites and ground station devices, and the ground station device may also be referred to as a core network device. The satellite may be a low earth orbit (low earth orbit, LEO) satellite, a non-geostationary earth orbit (non-geostationary earth orbit, NGEO) satellite, a medium earth orbit (medium earth orbit, MEO) satellite, a geostationary earth orbit (geostationary earth orbit, GEO) satellite, or the like. The satellite uses a plurality of beams to cover a service area. Different beams may be used for performing communication through one or more of time division, frequency division, and space division. The satellite performs wireless communication with the terminal device by using a broadcast communication signal, a navigation signal, and the like. The satellite may perform wireless communication with the ground station device. The satellite mentioned in embodiments of this application may be a satellite base station, may include an orbit receiver or a repeater configured to forward information, or may be a network side device mounted on the satellite. The network device may further include but is not limited to: an evolved NodeB (evolved NodeB, eNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like. Alternatively, the network device may be a gNB, a TRP, or a TP in a 5G system, or one antenna panel or one group of antenna panels (including a plurality of antenna panels) of a base station in a 5G system. In addition, the network device may alternatively be a network node that constitutes a gNB or a TP, for example, a BBU, a distributed unit (distributed unit, DU), or the like. Alternatively, the network device may be a device responsible for a network side function in a device-to-device (device-to-device, D2D) communication system, a machine to machine (machine to machine, M2M) communication system, an Internet of Things (Internet of Things, IoT), an Internet of Vehicles communication system, or another communication system.

The core network device 203 includes a session management network element 2031, an access management network element 2032, and a positioning management network element 2033. The ground station device is, for example, a device in a core network (core network, CN) in an existing mobile communication architecture (for example, a 3GPP access architecture of a 5G network) or a device in a core network in a future mobile communication architecture. As a bearer network, the core network provides an interface to a data network, provides a communication connection, authentication, management, and policy control for user equipment (UE), bears a data service, and the like. The CN may further include the following.

The session management network element 2031 is mainly configured to manage a session, assign and manage an internet protocol (internet protocol, IP) address of a terminal device, select and manage an endpoint of a user plane function interface and a policy control and charging function interface, notify downlink data, and the like. In a 5G communication system, the session management network element may be a session management function (session management function, SMF) network element. In a future communication system, the session management network element may still be an SMF network element, or may have another name. This is not limited in this application.

The access management network element 2032 is mainly configured to perform mobility management, access management, and the like, and may be configured to implement a function, for example, functions such as lawful interception and access authorization/authentication, other than session management in functions of a mobility management entity (mobility management entity, MME). In the 5G communication system, the access management network element may be an access and mobility management function (access and mobility management function, AMF) network element. In the future communication system, the access management network element may still be an AMF network element, or may have another name. This is not limited in this application.

The positioning management network element 2033 is responsible for positioning management, for example, receives a positioning request from another network element (such as the AMF network element), collects positioning data of a user, and obtains a location of the user through positioning calculation. The positioning management network element may further manage and configure a base station or a positioning management unit, to implement a configuration of a positioning reference signal, and the like. In the 5G communication system, the access management network element may be a location and mobility management function (location and mobility management function, LMF) network element. In the future communication system, the positioning management network element may still be an LMF network element, or may have another name. This is not limited in this application.

The satellite communication system includes a transparent transmission satellite architecture and a non-transparent transmission satellite architecture. Transparent transmission is also referred to as bent-pipe forward transmission. To be specific, only frequency conversion, signal amplification, and other processes are performed on a signal on a satellite, and the satellite is transparent to a signal as if the satellite does not exist. Non-transparent transmission is also referred to as regeneration (on-satellite access/processing) transmission. To be specific, a satellite has some or all base station functions. In this embodiment of this application, the satellites 1 to 3 use the transparent transmission satellite architecture. In addition, the satellite may work in a quasi earth-fixed mode or a satellite-fixed mode.

A specific structure of an execution body of the method provided in embodiments of this application is not specifically limited in embodiments of this application, provided that a program that records code of the method provided in embodiments of this application can be run to perform communication according to the method provided in embodiments of this application. For example, the method provided in embodiments of this application may be performed by a terminal device or a core network element, or a functional module that can invoke and execute the program in a terminal device or a core network element.

It should be noted that quantities and types of terminal devices and satellites included in the network architecture shown in FIG. 2 are merely examples, and embodiments of this application are not limited thereto. For example, more or fewer terminal devices that communicate with the satellite may be further included. For brevity, details are not described in the accompanying drawings. In addition, in the network architecture shown in FIG. 2, although the terminal device, the network device, and the core network device are shown, the application scenario may include but is not limited to the terminal device, the network device, and the core network device. For example, the application scenario may further include a core network node, a device configured to bear a virtualized network function, or the like. These are clear to persons skilled in the art, and details are not described herein.

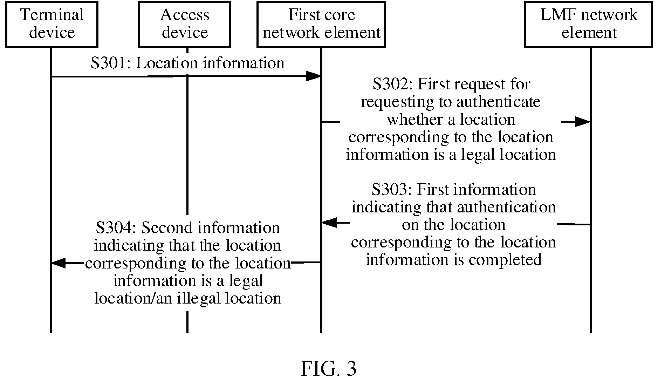

Based on the foregoing network architecture, the following describes a positioning method provided in embodiments of this application. FIG. 3 is an interaction diagram of a positioning method according to an embodiment of this application. As shown in FIG. 3, the positioning method may include the following steps.

S301: A terminal device sends location information to a first core network element. Correspondingly, the first core network element receives the location information from the terminal device.

In an NTN system, the terminal device needs to send the location information to the first core network element. In a possible implementation, the terminal device may send the location information to an access network device (for example, a base station), and then the access network device forwards the location information to the first core network element. In another possible implementation, the terminal device may send the location information to the first core network element through transparent transmission via the access network device. The location information may include at least one of location information and precision information of the terminal device. The location information may be carried in one or more of RRC setup complete information, an initial UE message, or a UE capability message.

The first core network element may be an SMF network element or an AMF network element.

S302: The first core network element sends, to an LMF network element, a first request for requesting to authenticate whether a location corresponding to the location information is a legal location. Correspondingly, the LMF receives, from the first core network element, the first request for requesting to authenticate whether the location corresponding to the location information is a legal location.

After receiving the location information from the terminal device, the first core network element may perform authentication on the location corresponding to the location information, to determine whether the location is a legal location. Specifically, the first core network element may send the first request to the LMF network element, to request the LMF network element to authenticate whether the location corresponding to the location information is a legal location. Optionally, the first request may include the location information from the terminal device. The first request may be triggered by an initial context setup complete message, or may be triggered by the initial UE message. This may be understood as that the first core network element sends the first request to the LMF network element after receiving the initial context setup complete message from the access network device, or the first core network element sends the first request to the LMF network element after receiving the initial UE message from the access network device.

After receiving the first request, the LMF network element may determine, based on a network type of an access network of the terminal device, whether to start a location authentication procedure. To be specific, the LMF network element may determine whether the network type of the access network of the terminal device is an NTN, and if the network type of the access network of the terminal device is the NTN, the LMF network element may determine a location of the terminal device, to obtain a first location; or if the network type of the access network of the terminal device is not the NTN, the LMF network element terminates the location authentication procedure.

Specifically, the LMF network element may determine the location of the terminal device to obtain the first location in the following several implementations.

Implementation 1: An existing positioning method in NR, such as a TDoA, an AOA, and an ECID, may be reused, or an NTN specific positioning method may be used. In this implementation, the existing positioning technology is reused, so that signaling overheads can be reduced.

Implementation 2: The first core network element/LMF network element sends configuration information to the terminal device, where the configuration information is for configuring a plurality of pieces of time and/or a plurality of BWPs. Time-frequency resources, patterns, or periodicities corresponding to the plurality of pieces of time are different. Time-frequency resources, patterns, or periodicities corresponding to the plurality of BWPs are different. In an embodiment, the configuration information includes a plurality of pieces of timestamp information. In other words, reference signals at different moments have different configurations. This may be understood as that one or more of time-frequency resources, patterns, and periodicities corresponding to the reference signals at different moments are different. For example, a moment 1 corresponds to a reference signal configuration 1 (a time-frequency resource 1 + a pattern pattern 1 + a periodicity 1 and the like), a moment 2 corresponds to a reference signal configuration 2 (a time-frequency resource 2 + a pattern pattern 2 + a periodicity 2 and the like), a moment 3 corresponds to a reference signal configuration 3 (the time-frequency resource 2 + a pattern pattern 3 + a periodicity 3 and the like), and a moment 4 corresponds to a reference signal configuration 4 (the time-frequency resource 1 + the pattern pattern 2 + a periodicity 4 and the like). In an embodiment, the configuration information includes the plurality of BWPs. In other words, reference signals of different BWPs have different configurations. This may be understood as that one or more of time-frequency resources, patterns, and periodicities corresponding to the reference signals of different BWPs are different. For example, a BWP 1 corresponds to a reference signal configuration 1 (a time-frequency resource 1 + a pattern pattern 1 + a periodicity 1 and the like), a BWP 2 corresponds to a reference signal configuration 2 (a time-frequency resource 2 + a pattern pattern 2 + a periodicity 2 and the like), a BWP 3 corresponds to a reference signal configuration 3 (the time-frequency resource 2 + a pattern pattern 3 + a periodicity 3 and the like), and a BWP 4 corresponds to a reference signal configuration 4 (the time-frequency resource 1 + the pattern pattern 2 + a periodicity 4 and the like). In an embodiment, the configuration information includes a plurality of moments and the plurality of BWPs, and the plurality of moments and the plurality of BWPs may be in one-to-one correspondence. In other words, reference signals at different moments and of different BWPs have different configurations. This may be understood as that one or more of time-frequency resources, patterns, and periodicities corresponding to the reference signals at different moments and of different BWPs are different. For example, a moment 1 and a BWP 1 correspond to a reference signal configuration 1 (a time-frequency resource 1 + a pattern pattern 1 + a periodicity 1 and the like), a moment 2 and a BWP 2 correspond to a reference signal configuration 2 (a time-frequency resource 2 + a pattern pattern 2 + a periodicity 2 and the like), a moment 3 and a BWP 3 correspond to a reference signal configuration 3 (the time-frequency resource 2 + a pattern pattern 3 + a periodicity 3 and the like), and a moment 4 and a BWP 4 correspond to a reference signal configuration 4 (the time-frequency resource 1 + the pattern pattern 2 + a periodicity 4 and the like).

Further, optionally, the configuration information may further include a plurality of beams. For specific implementation, refer to the foregoing descriptions that the configuration information includes the plurality of pieces of time and/or the plurality of BWPs.

Further, optionally, the configuration information may further include satellite ephemeris information (for example, a satellite number, a cell number, or satellite location information), and the satellite ephemeris information may be for generating an uplink beam direction of a VSAT terminal. The satellite ephemeris information is added to the configuration information, to assist the terminal device in uplink beam forming and reference signal sending, and improve reliability of estimating the location of the terminal device by a network side.

After receiving the configuration information from the first core network element/LMF network element, the terminal device may send a plurality of reference signals to the first core network element/LMF network element based on the configuration information. The reference signal in this embodiment of this application may be a sounding reference signal (Sounding Reference Signal, SRS), may be a demodulation reference signal (demodulation reference signal, DMRS), a channel state information reference signal (channel state information reference signal, CSI-RS), a tracking reference signal (tracking reference signal, TRS), or the like. A type of the reference signal is not limited in this embodiment of this application.

After receiving the plurality of reference signals from the terminal device, the first core network element/LMF network element may estimate the location of the terminal device based on related information such as quality, distances, and angles of the plurality of reference signals, to obtain the first location. For example, the first core network element/LMF network element may determine, based on the related information such as the quality, the distances, and the angles of the plurality of reference signals, whether the terminal device is located in an intersection of the plurality of beams, for example, estimate, based on related information such as timing advance (timing advance, TA) or a Doppler value (Doppler value), the location of the terminal device. In this implementation, the network side configures the plurality of pieces of time and/or the plurality of BWPs for a terminal side at a time.

S303: The LMF network element sends, to the first core network element, first information indicating that authentication on the location corresponding to the location information is completed. Correspondingly, the first core network element receives, from the LMF network element, the first information indicating that the authentication on the location corresponding to the location information is completed.

S304: The first core network element sends, to the terminal device, second information indicating that the location corresponding to the location information is a legal location/an illegal location. Correspondingly, the terminal device receives, from the first core network element, the second information indicating that the location corresponding to the location information is the legal/illegal location.

In a possible implementation, after determining the location of the terminal device to obtain the first location, the LMF network element may send the first location to the first core network element. When an error between the first location and the location corresponding to the location information is less than a threshold, the first core network element sends, to the terminal device, the second information indicating that the location corresponding to the location information is a legal location, and starts a related procedure such as a subsequent service. Alternatively, when an error between the first location and the location corresponding to the location information is greater than or equal to a threshold, the first core network element sends, to the terminal device, the second information indicating that the location corresponding to the location information is an illegal location, where for example, the second information may be Location Verified Failure; and terminates a current service of the terminal device.

In another possible implementation, after determining the location of the terminal device to obtain the first location, the LMF network element determines whether an error between the first location and the location corresponding to the location information is less than a threshold. If the error between the first location and the location corresponding to the location information is less than the threshold, the LMF network element sends, to the first core network element, information indicating that the location corresponding to the location information is a legal location, and after receiving, from the LMF network element, the information indicating that the location corresponding to the location information is a legal location, the first core network element forwards the information to the terminal device. In other words, the first core network element sends, to the terminal device, the second information indicating that the location corresponding to the location information is a legal location, and starts a related procedure such as a subsequent service. Alternatively, if the error between the first location and the location corresponding to the location information is greater than or equal to the threshold, the LMF network element sends, to the first core network element, information indicating that the location corresponding to the location information is an illegal location, and after receiving, from the LMF network element, the information indicating that the location corresponding to the location information is an illegal location, the first core network element forwards the information to the terminal device. In other words, the first core network element sends, to the terminal device, the second information indicating that the location corresponding to the location information is an illegal location, where for example, the second information may be Location Verified Failure; and terminates a current service of the terminal device.

Different from a case in which the network side does not perform location authentication on the location corresponding to the location information after receiving the location information from the terminal side, in the solution provided in this application, the terminal side sends the location information to the network side, and the network side performs location authentication on the terminal device, so that a probability that the terminal device reports a fake location can be reduced, and precision of positioning the terminal device by a satellite can be improved.

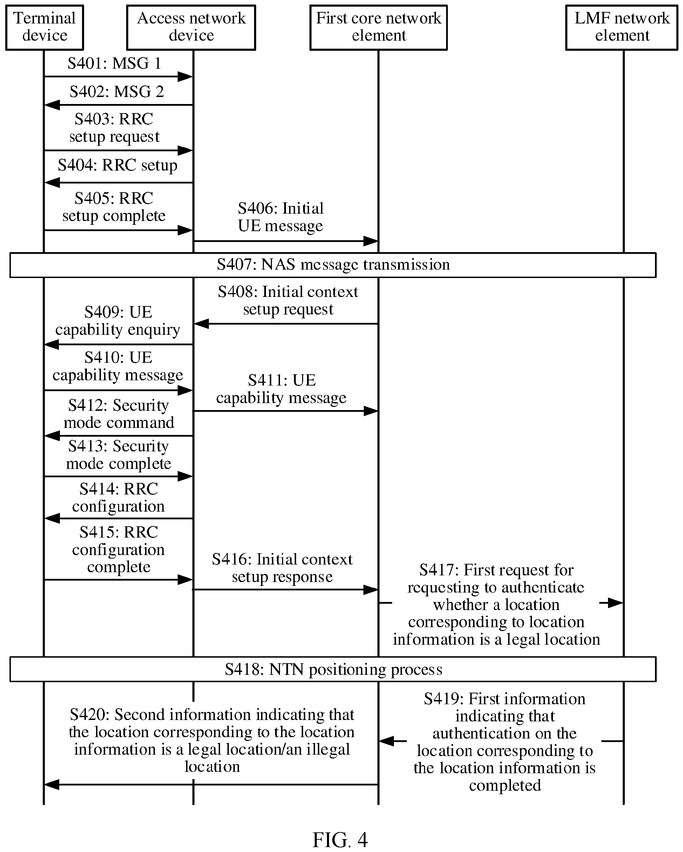

Based on the positioning method described in FIG. 3, FIG. 4 is an interaction diagram of a communication method according to an embodiment of this application. The embodiment shown in FIG. 4 may provide a method for triggering a location authentication procedure and steps of an end-to-end procedure for a requirement of location authentication in an NTN scenario. As shown in FIG. 4, the communication method may include the following steps.

S401: A terminal device sends an MSG 1 (Message 1) to an access network device. Correspondingly, the access network device receives the MSG 1 from the terminal device.

S402: The access network device sends an MSG 2 (Message 2) to the terminal device. Correspondingly, the terminal device receives the MSG 2 from the access network device.

S403: The terminal device sends an RRC setup request (RRC Setup Request) to the access network device. Correspondingly, the access network device receives the RRC setup request from the terminal device.

S404: The access network device sends an RRC setup message (RRC Setup) to the terminal device. Correspondingly, the terminal device receives the RRC setup message from the access network device.

S405: The terminal device sends an RRC setup complete (RRC Setup Complete) message to the access network device. Correspondingly, the access network device receives the RRC setup complete message from the terminal device.

S406: The access network device sends an initial UE message (Initial UE Message) to a first core network element. Correspondingly, the first core network element receives the initial UE message from the access network device.

S407: The terminal device, the access network device, the first core network element, and an LMF network element perform non-access-stratum (non-access-stratum, NAS) message transmission.

S408: The first core network element sends an initial context setup request (Initial Context Setup Request) to the access network device. Correspondingly, the access network device receives the initial context setup request from the first core network element.

S409: The access network device sends a UE capability enquiry message (UE Capability Enquiry) to the terminal device. Correspondingly, the terminal device receives the UE capability enquiry message from the access network device.

S410: The terminal device sends a UE capability message (UE Capability Information) to the access network device. Correspondingly, the access network device receives the UE capability message from the terminal device.

S411: The access network device sends the UE capability message (UE Capability Information) to the first core network element. Correspondingly, the first core network element receives the UE capability message from the access network device.

S412: The access network device sends a security mode command (Security Mode Command) to the terminal device. Correspondingly, the terminal device receives the security mode command from the access network device.

S413: The terminal device sends a security mode complete message (Security Mode Complete) to the access network device. Correspondingly, the access network device receives the security mode complete message from the terminal device.

S414: The access network device sends an RRC configuration (RRC Reconfiguration) to the terminal device. Correspondingly, the terminal device receives the RRC configuration from the access network device.

S415: The terminal device sends an RRC configuration complete message (RRC Reconfiguration Complete) to the access network device. Correspondingly, the access network device receives the RRC configuration complete message from the terminal device.

S416: The access network device sends an initial context setup response message (Initial Context Setup Response) to the first core network element. Correspondingly, the first core network element receives the initial context setup response message from the access network device.

S417: The first core network element sends, to the LMF network element, a first request for requesting to authenticate whether a location corresponding to location information is a legal location. Correspondingly, the LMF receives, from the first core network element, the first request for requesting to authenticate whether the location corresponding to the location information is a legal location.

It should be understood that step S417 corresponds to step S302. For related descriptions of step S417, refer to the foregoing descriptions of step S302. To avoid repetition, details are not described herein again.

S418: The terminal device, the access network device, the first core network element, and the LMF network element perform an NTN positioning process.

S419: The LMF network element sends, to the first core network element, first information indicating that authentication on the location corresponding to the location information is completed. Correspondingly, the first core network element receives, from the LMF network element, the first information indicating that the authentication on the location corresponding to the location information is completed.

It should be understood that step S419 corresponds to step S303. For related descriptions of step S419, refer to the foregoing descriptions of step S303. To avoid repetition, details are not described herein again.

S420: The first core network element sends, to the terminal device, second information indicating that the location corresponding to the location information is a legal location/an illegal location. Correspondingly, the terminal device receives, from the first core network element, the second information indicating that the location corresponding to the location information is the legal/illegal location.

It should be understood that step S420 corresponds to step S304. For related descriptions of step S420, refer to the foregoing descriptions of step S304. To avoid repetition, details are not described herein again.

It may be understood that step S401 to step S416 are interaction between the terminal device and a network side, to complete random access, RRC setup, initial context setup, UE capability reporting, security mode authentication, and RRC reconfiguration information. In this embodiment of this application, the terminal device needs to report the location information to the network side. Reporting may be specifically performed in one or more of step S405 and step S406, or step S410 and step S411. Step S417 to step S420 may correspond to the location authentication procedure in step S302 to step 304 in FIG. 3, where step S417 may be triggered by step S416, and then the location authentication procedure is performed. For the specific NTN positioning process in step S418, refer to the descriptions of the several specific implementations in which the LMF network element determines the location of the terminal device to obtain the first location in step S302. Details are not described herein again.

In this embodiment of this application, the end-to-end procedure in which the network side is triggered, based on the initial context setup response (Initial Context Setup Response), to perform location authentication in the NTN scenario is provided. It can be learned that after a terminal side and the network side complete RRC configuration-related information exchange (corresponding to step S415 in FIG. 4), the terminal device has entered a connected mode. In this case, the location authentication procedure is started. The network side may select a narrow beam (that is, a non-SSB beam) to perform location authentication on the terminal device. Flexible beamforming may be used for the narrow beam, and a beam shape is transparent to the terminal device, so that reliability of the location authentication is effectively improved. That a beam shape is transparent to the terminal device may be understood as that the terminal device does not know a beam on which the network side performs receiving. In this way, the terminal device cannot forge the location information, and the reliability of the location authentication can be improved.

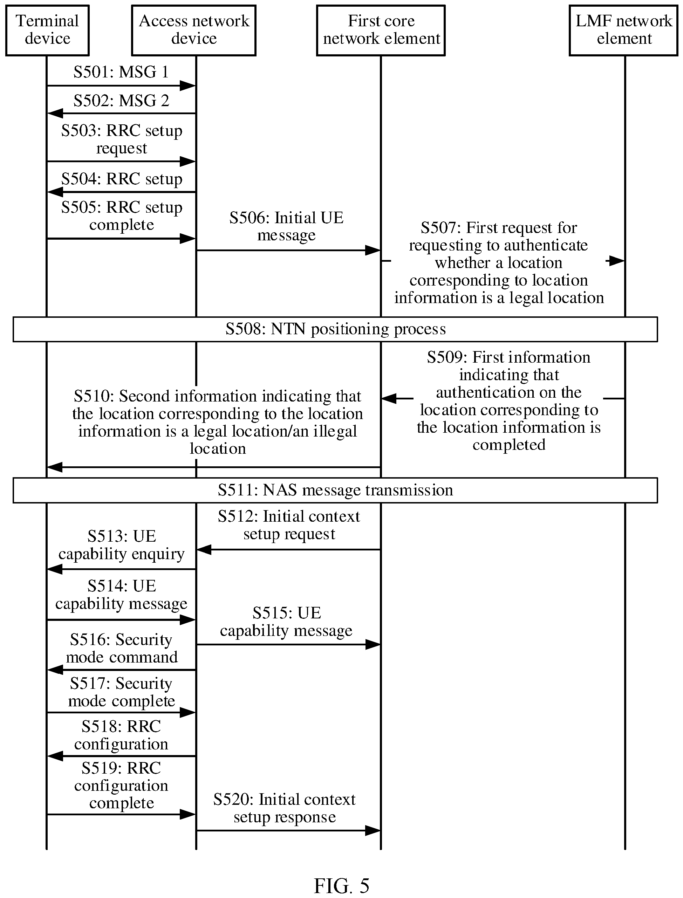

Based on the positioning method described in FIG. 3, FIG. 5 is an interaction diagram of another communication method according to an embodiment of this application. The embodiment shown in FIG. 5 may provide another method for triggering a location authentication procedure and steps of an end-to-end procedure for a requirement of location authentication in an NTN scenario. As shown in FIG. 5, the communication method may include the following steps.

S501: A terminal device sends an MSG 1 (Message 1) to an access network device. Correspondingly, the access network device receives the MSG 1 from the terminal device.

S502: The access network device sends an MSG 2 (Message 2) to the terminal device. Correspondingly, the terminal device receives the MSG 2 from the access network device.

S503: The terminal device sends an RRC setup request (RRC Setup Request) to the access network device. Correspondingly, the access network device receives the RRC setup request from the terminal device.

S504: The access network device sends an RRC setup message (RRC Setup) to the terminal device. Correspondingly, the terminal device receives the RRC setup message from the access network device.

S505: The terminal device sends an RRC setup complete (RRC Setup Complete) message to the access network device. Correspondingly, the access network device receives the RRC setup complete message from the terminal device.

S506: The access network device sends an initial UE message (Initial UE Message) to a first core network element. Correspondingly, the first core network element receives the initial UE message from the access network device.

S507: The first core network element sends, to an LMF network element, a first request for requesting to authenticate whether a location corresponding to location information is a legal location. Correspondingly, the LMF receives, from the first core network element, the first request for requesting to authenticate whether the location corresponding to the location information is a legal location.

It should be understood that step S507 corresponds to step S302. For related descriptions of step S507, refer to the foregoing descriptions of step S302. To avoid repetition, details are not described herein again.

S508: The terminal device, the access network device, the first core network element, and the LMF network element perform an NTN positioning process.

S509: The LMF network element sends, to the first core network element, first information indicating that authentication on the location corresponding to the location information is completed. Correspondingly, the first core network element receives, from the LMF network element, the first information indicating that the authentication on the location corresponding to the location information is completed.

It should be understood that step S509 corresponds to step S303. For related descriptions of step S509, refer to the foregoing descriptions of step S303. To avoid repetition, details are not described herein again.

S510: The first core network element sends, to the terminal device, second information indicating that the location corresponding to the location information is a legal location/an illegal location. Correspondingly, the terminal device receives, from the first core network element, the second information indicating that the location corresponding to the location information is the legal/illegal location.

It should be understood that step S510 corresponds to step S304. For related descriptions of step S510, refer to the foregoing descriptions of step S304. To avoid repetition, details are not described herein again.

S511: The terminal device, the access network device, the first core network element, and the LMF network element perform NAS message transmission.

S512: The first core network element sends an initial context setup request (Initial Context Setup Request) to the access network device. Correspondingly, the access network device receives the initial context setup request from the first core network element.

S513: The access network device sends a UE capability enquiry message (UE Capability Enquiry) to the terminal device. Correspondingly, the terminal device receives the UE capability enquiry message from the access network device.

S514: The terminal device sends a UE capability message (UE Capability Information) to the access network device. Correspondingly, the access network device receives the UE capability message from the terminal device.

S515: The access network device sends the UE capability message (UE Capability Information) to the first core network element. Correspondingly, the first core network element receives the UE capability message from the access network device.

S516: The access network device sends a security mode command (Security Mode Command) to the terminal device. Correspondingly, the terminal device receives the security mode command from the access network device.

S517: The terminal device sends a security mode complete message (Security Mode Complete) to the access network device. Correspondingly, the access network device receives the security mode complete message from the terminal device.

S518: The access network device sends an RRC configuration (RRC Reconfiguration) to the terminal device. Correspondingly, the terminal device receives the RRC configuration from the access network device.

S519: The terminal device sends an RRC configuration complete message (RRC Reconfiguration Complete) to the access network device. Correspondingly, the access network device receives the RRC configuration complete message from the terminal device.

S520: The access network device sends an initial context setup response message (Initial Context Setup Response) to the first core network element. Correspondingly, the first core network element receives the initial context setup response message from the access network device.

It may be understood that step S501 to step S506 are interaction between the terminal device and a network side, to complete random access and RRC setup. In this embodiment of this application, the terminal device needs to report the location information to the network side. Reporting may be specifically performed in one or more of step S505 and step S506. Step S507 to step S510 may correspond to the location authentication procedure in step S302 to step 304 in FIG. 3, where step S507 may be triggered by step S506, and then the location authentication procedure is performed. For the specific NTN positioning process in step S508, refer to the descriptions of the several specific implementations in which the LMF network element determines the location of the terminal device to obtain the first location in step S302. Details are not described herein again.

In this embodiment of this application, the end-to-end procedure in which the network side is triggered, based on the initial UE message (Initial UE Message), to perform location authentication in the NTN scenario is provided. It can be learned that, before a terminal side and the network side complete initial context setup interaction (corresponding to step S512 in FIG. 5), the location authentication procedure is triggered in S506, so that the location corresponding to the location information reported by the terminal device can be quickly authenticated. If the authentication fails, a subsequent related procedure may be terminated. This not only can effectively improve reliability of the location authentication, but also can reduce signaling overheads and a delay in the location authentication procedure.

Implementation 2 in which the LMF network element determines the location of the terminal device to obtain the first location described in the method embodiments in FIG. 3 to FIG. 5 may be applied to a single-satellite scenario, or may be applied to a multi-satellite scenario.

A specific implementation in which the LMF network element determines the location of the terminal device in the single-satellite scenario may be as follows:
The network side sends configuration information to the terminal side at a time, where the configuration information includes a plurality of pieces of time and/or a plurality of BWPs. The terminal side sends a plurality of reference signals to the network side based on the configuration information, and the network side may receive the plurality of reference signals by using a flexible beam, where a beam shape is transparent to the terminal side, so that the location of the terminal device may be determined based on related information such as quality, distances, and angles of the plurality of reference signals, to obtain the first location. For example, whether the terminal device is located in an intersection of a plurality of beams is determined based on the related information such as the quality, the distances, and the angles of the plurality of reference signals.

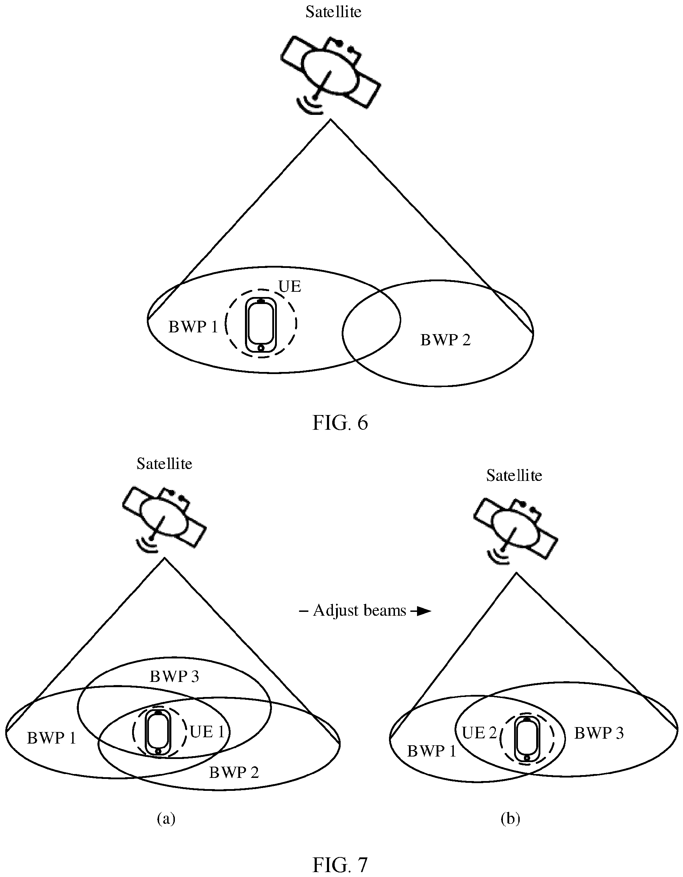

It should be noted that, to position the terminal device, the beam on the network side may be flexibly adjusted. FIG. 6 is a diagram of a beam shape before single-satellite adjustment according to an embodiment of this application, and FIG. 7 is a diagram of a beam shape after single-satellite adjustment according to an embodiment of this application. It can be learned that beams/BWPs for determining a location of a terminal device in FIG. 6 and FIG. 7 are different. For different terminal devices, shapesBWPs of flexible beams are different. As shown in (a) in FIG. 7, UE 1 is positioned by using three beams (corresponding to a BWP 1 to a BWP 3). As shown in (b) in FIG. 7, UE 2 is positioned by using two beams (corresponding to a BWP 1 and a BWP 3, and the two beams are different from the beams used for the UE 1). For a single-satellite scenario, in this embodiment of this application, a network side sends a plurality of configurations to a terminal side at a time, and determines a location of the terminal device by using the flexible beam, and the beam is transparent to the terminal side, so that reliability of location authentication can be improved.

A specific implementation in which the LMF network element locates the location of the terminal device in a multi-satellite scenario may be as follows:
The network side sends configuration information to the terminal side at a time, where the configuration information includes a plurality of pieces of time and/or a plurality of BWPs. The configuration information may further carry satellite ephemeris-related information, for example, a satellite number, a cell number, or satellite location information. The satellite ephemeris-related information may be for generating an uplink beam direction of a VSAT terminal. The terminal side sends a plurality of reference signals to the network side based on the configuration information, and the network side may receive the plurality of reference signals in a flexible beam manner or a multi-satellite coordination beam hopping manner, where a beam shape is transparent to the terminal side, so that the location of the terminal device may be determined based on related information such as quality, distances, and angles of the plurality of reference signals, to obtain a first location. For example, whether the terminal device is located in an intersection of a plurality of beams is determined based on the related information such as the quality, the distances, and the angles of the plurality of reference signals.

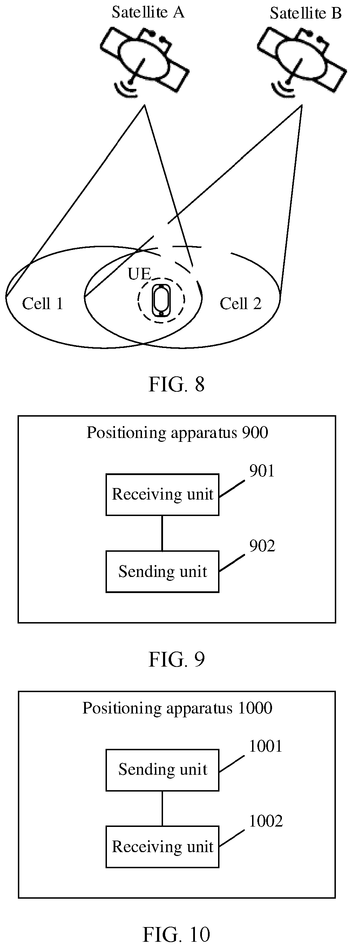

It should be noted that, to position the terminal device, the beam on the network side may be flexibly adjusted. FIG. 8 is a diagram of multi-satellite beam coverage according to an embodiment of this application. As shown in FIG. 8, for example, a satellite B may adjust a beam to a coverage area of a satellite A, to form multiple coverage for a terminal device. This helps improve precision of determining a location of the terminal device. In a multi-satellite scenario, in this embodiment of this application, a network side sends a plurality of configurations to a terminal side at a time, and adds satellite ephemeris-related information to configuration information, to assist the terminal device in uplink beam forming and reference signal reporting. In addition, multi-satellite assistance is used for determining the location of the terminal device, so that precision of location authentication can be improved.

The foregoing describes the method embodiments provided in embodiments of this application, and the following describes apparatus embodiments in embodiments of this application.

FIG. 9 is a diagram of a structure of a positioning apparatus according to an embodiment of this application. The positioning apparatus may be a first core network element, an apparatus (for example, a chip, a chip system, or a circuit) in a first core network element, or an apparatus that can be used together with a first core network element. As shown in FIG. 9, the positioning apparatus 900 includes at least a receiving unit 901 and a sending unit 902.

The receiving unit 901 is configured to receive location information from a terminal device.

The sending unit 902 is configured to send a first request to an LMF network element, where the first request is for authenticating whether a location corresponding to the location information is a legal location.

The receiving unit 901 is further configured to receive, from the LMF network element, first information indicating that authentication on the location corresponding to the location information is completed.

The sending unit 902 is further configured to send, to the terminal device, second information indicating that the location corresponding to the location information is a legal location/an illegal location.

In an embodiment, the sending unit 902 is specifically configured to: when an error between a first location and the location corresponding to the location information is less than a threshold, send, to the terminal device, the second information indicating that the location corresponding to the location information is a legal location, where the first location is a location of the terminal device that is determined when an access network of the terminal device is a non-terrestrial network NTN.

In an embodiment, the sending unit 902 is specifically configured to:
when an error between a first location and the location corresponding to the location information is greater than or equal to a threshold, send, to the terminal device, the second information indicating that the location corresponding to the location information is an illegal location, where the first location is a location of the terminal device that is determined when an access network of the terminal device is a non-terrestrial network NTN; and terminate a current service of the terminal device.

In an embodiment, the location information is carried in one or more of RRC setup complete information, an initial UE message, or a UE capability message.

In an embodiment, the first request is triggered by an initial context setup complete message.

In an embodiment, the first request is triggered by the initial UE message.

In an embodiment, the sending unit 902 is further configured to send configuration information to the terminal device, where the configuration information is for configuring a plurality of pieces of time and/or a plurality of BWPs.

The receiving unit 901 is further configured to receive a plurality of reference signals from the terminal device, where the plurality of reference signals are sent by the terminal device based on the configuration information.

In an embodiment, time-frequency resources, patterns, or periodicities corresponding to the plurality of pieces of time are different.

In an embodiment, time-frequency resources, patterns, or periodicities corresponding to the plurality of BWPs are different.

In an embodiment, the configuration information further includes satellite ephemeris information.

For more detailed descriptions of the receiving unit 901 and the sending unit 902, directly refer to the related descriptions of the first core network element in the method embodiments shown in FIG. 3 to FIG. 5. Details are not described herein again.

FIG. 10 is a diagram of a structure of another positioning apparatus according to an embodiment of this application. The positioning apparatus may be a terminal device, an apparatus (for example, a chip, a chip system, or a circuit) in a terminal device, or an apparatus that can be used together with a terminal device. As shown in FIG. 10, the positioning apparatus 1000 includes at least a sending unit 1001 and a receiving unit 1002.

The sending unit 1001 is configured to send location information to a first core network element.

The receiving unit 1002 is configured to receive, from the first core network element, second information indicating that a location corresponding to the location information is a legal location/an illegal location.

In an embodiment, the location information is carried in one or more of RRC setup complete information, an initial UE message, or a UE capability message.

In an embodiment, the receiving unit 1002 is further configured to receive configuration information from the first core network element, where the configuration information is for configuring a plurality of pieces of time and/or a plurality of BWPs.

The sending unit 1001 is further configured to send a plurality of reference signals to the first core network element based on the configuration information.

In an embodiment, time-frequency resources, patterns, or periodicities corresponding to the plurality of pieces of time are different.

In an embodiment, time-frequency resources, patterns, or periodicities corresponding to the plurality of BWPs are different.

In an embodiment, the configuration information further includes satellite ephemeris information.

For more detailed descriptions of the sending unit 1001 and the receiving unit 1002, directly refer to the related descriptions of the terminal device in the method embodiments shown in FIG. 3 to FIG. 5. Details are not described herein again.

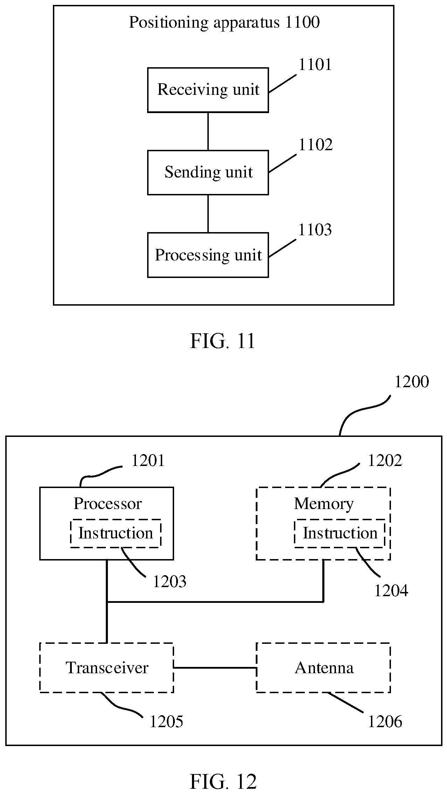

FIG. 11 is a diagram of a structure of still another positioning apparatus according to an embodiment of this application. The positioning apparatus may be an LMF network element, or may be an apparatus (for example, a chip, a chip system, or a circuit) in an LMF network element, or an apparatus that can be used together with an LMF network element. As shown in FIG. 11, the positioning apparatus 1100 includes at least a receiving unit 1101, a sending unit 1102, and a processing unit 1103.

The receiving unit 1101 is configured to receive a first request from a first core network element, where the first request is for requesting to authenticate whether a location corresponding to location information is a legal location, and the location information is from a terminal device.

The sending unit 1102 is configured to send, to the first core network element, first information indicating that authentication on the location corresponding to the location information is completed.

In an embodiment, the location information is carried in one or more of RRC setup complete information, an initial UE message, or a UE capability message.

In an embodiment, the first request is triggered by an initial context setup complete message.

In an embodiment, the first request is triggered by the initial UE message.

In an embodiment, the receiving unit 1101 is further configured to receive a plurality of reference signals from the terminal device, where the plurality of reference signals are sent by the terminal device based on configuration information.

The positioning apparatus 1100 further includes:
the processing unit 1103, configured to: when an access network of the terminal device is an NTN, determine a first location based on at least one of quality, distances, and angles of the plurality of reference signals.

For more detailed descriptions of the receiving unit 1101, the sending unit 1102, and the processing unit 1103, directly refer to the related descriptions of the LMF network element in the method embodiments shown in FIG. 3 to FIG. 5. Details are not described herein again.

Based on the foregoing network architecture, FIG. 12 is a diagram of a structure of still yet another positioning apparatus according to an embodiment of this application. As shown in FIG. 12, the apparatus 1200 may include one or more processors 1201. The processor 1201 may also be referred to as a processing unit, and may implement a specific control function. The processor 1201 may be a general-purpose processor, a dedicated processor, or the like. For example, the processor 1201 may be a baseband processor or a central processing unit. The baseband processor may be configured to process a communication protocol and communication data. The central processing unit may be configured to: control the positioning apparatus (for example, a base station, a baseband chip, a terminal, a terminal chip, a DU, or a CU), execute a software program, and process data of the software program.

In an optional design, the processor 1201 may alternatively store instructions and/or data 1203, and the instructions and/or data 1203 may be run by the processor, to enable the apparatus 1200 to perform the method described in the foregoing method embodiments.

In another optional design, the processor 1201 may include a transceiver unit configured to implement receiving and sending functions. For example, the transceiver unit may be a transceiver circuit, an interface, an interface circuit, or a communication interface. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In still another possible design, the apparatus 1200 may include a circuit. The circuit may implement the sending, receiving, or communication function in the foregoing method embodiments.

Optionally, the apparatus 1200 may include one or more memories 1202, where the one or more memories 1202 may store instructions 1204, and the instructions may be run on the processor, to enable the apparatus 1200 to perform the method described in the foregoing method embodiments. Optionally, the memory may further store data. Optionally, the processor may also store instructions and/or data. The processor and the memory may be separately disposed, or may be integrated together. For example, the correspondence described in the foregoing method embodiments may be stored in the memory or stored in the processor.

Optionally, the apparatus 1200 may further include a transceiver 1205 and/or an antenna 1206. The processor 1201 may be referred to as a processing unit, and controls the apparatus 1200. The transceiver 1205 may be referred to as a transceiver unit, a transceiver machine, a transceiver circuit, a transceiver apparatus, a transceiver module, or the like, and is configured to implement a sending/receiving function.

Optionally, the apparatus 1200 in this embodiment of this application may be configured to perform the positioning method described in FIG. 3 to FIG. 5 in embodiments of this application.

In an embodiment, the positioning apparatus 1200 may be a first core network element, or may be a module (for example, a chip, a chip system, or a circuit) in a first core network element. When the computer program instructions stored in the memory 1202 are executed, the transceiver 1205 is configured to perform operations performed by the receiving unit 901 and the sending unit 902 in the foregoing embodiments. The transceiver 1205 is further configured to send information to a communication apparatus other than the positioning apparatus. The first core network element may be further configured to perform various methods performed by the first core network element in the method embodiments in FIG. 3 to FIG. 5. Details are not described again.

In an embodiment, the positioning apparatus 1200 may be a terminal device, or may be a module (for example, a chip, a chip system, or a circuit) in a terminal device. When the computer program instructions stored in the memory 1202 are executed, the transceiver 1205 is configured to receive information from a communication apparatus other than the apparatus, and the transceiver 1205 is further configured to perform operations performed by the sending unit 1001 and the receiving unit 1002 in the foregoing embodiments. The terminal device may be further configured to perform various methods performed by the terminal device in the method embodiments in FIG. 3 to FIG. 5. Details are not described again.

In an embodiment, the positioning apparatus 1200 may be an LMF network element, or may be a module (for example, a chip, a chip system, or a circuit) in an LMF network element. When the computer program instructions stored in the memory 1202 are executed, the processor 1201 is configured to perform operations performed by the processing unit 1103 in the foregoing embodiments. The transceiver 1205 is configured to receive information from a communication apparatus other than the positioning apparatus. The transceiver 1205 is further configured to perform operations performed by the receiving unit 1101 and the sending unit 1102 in the foregoing embodiments. The LMF network element may be further configured to perform various methods performed by the LMF network element in the method embodiments in FIG. 3 to FIG. 5. Details are not described again.

The processor and the transceiver described in this application may be implemented in an integrated circuit (integrated circuit, IC), an analog IC, a radio frequency integrated circuit RFIC, a mixed signal IC, an application-specific integrated circuit (application-specific integrated circuit, ASIC), a printed circuit board (printed circuit board, PCB), an electronic device, or the like. The processor and the transceiver may also be manufactured by using various IC process technologies, for example, a complementary metal oxide semiconductor (complementary metal oxide semiconductor, CMOS), an N-type metal oxide semiconductor (nMetal-oxide-semiconductor, NMOS), a P-type metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

The apparatus described in the foregoing embodiments may be a network device or a terminal device. However, a scope of the apparatus described in this application is not limited thereto, and a structure of the apparatus may not be limited to FIG. 12. The apparatus may be an independent device, or may be a part of a larger device. For example, the apparatus may be:
(1) an independent integrated circuit IC, a chip, or a chip system or subsystem;
(2) a set having one or more ICs, where optionally, the IC set may also include a storage component configured to store data and/or instructions;
(3) an ASIC, for example, a mobile station modem (mobile station modem, MSM);
(4) a module that can be embedded in another device; or
(5) others.

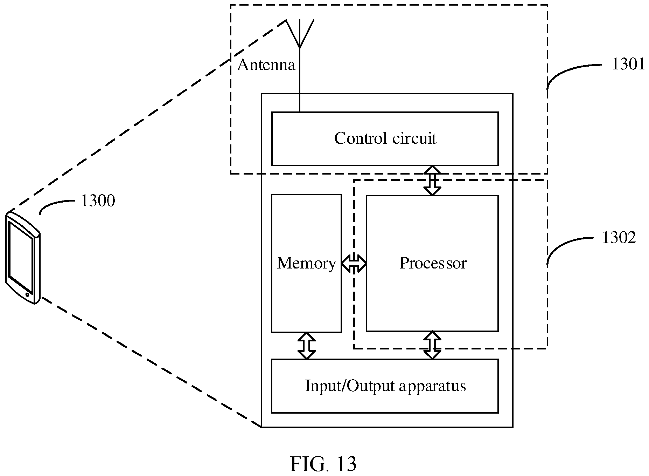

FIG. 13 is a diagram of a structure of a terminal device according to an embodiment of this application. FIG. 13 shows only main components of the terminal device. As shown in FIG. 13, the terminal device 1300 includes a processor, a memory, a control circuit, an antenna, and an input/output apparatus. The processor is mainly configured to: process a communication protocol and communication data, control an entire terminal, execute a software program, and process data of the software program. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to receive data input by a user and output data to the user.

After the terminal device is powered on, the processor may read the software program in a storage unit, parse and execute instructions of the software program, and process the data of the software program. When data needs to be sent in a wireless manner, the processor performs baseband processing on the to-be-sent data, and outputs a baseband signal to the radio frequency circuit. The radio frequency circuit processes the baseband signal to obtain a radio frequency signal, and sends the radio frequency signal to the outside in the form of the electromagnetic wave through the antenna. When data is sent to the terminal, the radio frequency circuit receives a radio frequency signal through the antenna, further converts the radio frequency signal into a baseband signal, and outputs the baseband signal to the processor. The processor converts the baseband signal into data, and processes the data.

For ease of description, FIG. 13 shows only one memory and one processor. In an actual terminal device, there may be a plurality of processors and memories. The memory may also be referred to as a storage medium, a storage device, or the like. This is not limited in embodiments of this application.

In an optional implementation, the processor may include a baseband processor and a central processing unit. The baseband processor is mainly configured to process the communication protocol and the communication data, and the central processing unit is mainly configured to: control the entire terminal, execute the software program, and process the data of the software program. The processor in FIG. 13 integrates functions of the baseband processor and the central processing unit. Persons skilled in the art may understand that the baseband processor and the central processing unit may alternatively be independent processors, and are interconnected by using a technology such as a bus. Persons skilled in the art may understand that the terminal may include a plurality of baseband processors to adapt to different network standards, and the terminal may include a plurality of central processing units to enhance a processing capability of the terminal. All the components of the terminal may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the storage unit in a form of a software program, and the processor executes the software program to implement a baseband processing function.

In an example, as shown in FIG. 13, the terminal device 1300 includes a transceiver 1301 and a processor 1302. The antenna and the control circuit that have receiving and sending functions may be considered as the transceiver 1301. The transceiver may also be referred to as a transceiver machine, a transceiver apparatus, or the like. Optionally, a component that is in the transceiver 1301 and that is configured to implement a receiving function may be considered as a receiving unit, and a component that is in the transceiver 1301 and that is configured to implement a sending function may be considered as a sending unit. That is, the transceiver 1301 includes the receiving unit and the sending unit. For example, the receiving unit may also be referred to as a receiver machine, a receiver, a receiver circuit, or the like, and the sending unit may be referred to as a transmitter machine, a transmitter, a transmitter circuit, or the like. Optionally, the receiving unit and the sending unit may be one integrated unit, or may be a plurality of independent units. The receiving unit and the sending unit may be in one geographical position, or may be distributed in a plurality of geographical positions.

In an embodiment, the transceiver 1301 is configured to perform operations performed by the sending unit 1001 and the receiving unit 1002 in the foregoing embodiments. The terminal device 1300 may be further configured to perform various methods performed by the terminal device in the method embodiments described in FIG. 3 to FIG. 5. Details are not described again.

An embodiment of this application further provides a computer-readable storage medium, and the computer-readable storage medium stores a computer program. When the program is executed by a processor, a procedure related to the first core network element in the positioning method provided in the foregoing method embodiments may be implemented.

An embodiment of this application further provides a computer-readable storage medium, and the computer-readable storage medium stores a computer program. When the program is executed by a processor, a procedure related to the terminal device in the positioning method provided in the foregoing method embodiments may be implemented.

An embodiment of this application further provides a computer-readable storage medium, and the computer-readable storage medium stores a computer program. When the program is executed by a processor, a procedure related to the LMF network element in the positioning method provided in the foregoing method embodiments may be implemented.

An embodiment of this application further provides a computer program product. When the computer program product runs on a computer or a processor, the computer or the processor is enabled to perform one or more steps in any one of the foregoing positioning methods. When the foregoing modules in the device are implemented in a form of a software functional unit and sold or used as an independent product, the modules may be stored in a computer-readable storage medium.

An embodiment of this application further provides a chip system, including at least one processor and a communication interface. The communication interface and the at least one processor are interconnected through a line, and the at least one processor is configured to run a computer program or instructions, to perform some or all of the steps recorded in any one of the method embodiments corresponding to FIG. 3 to FIG. 5. The chip system may include a chip, or may include a chip and another discrete component.

An embodiment of this application further discloses a communication system. The system includes a first core network element, a terminal device, and an LMF network element. For specific descriptions, refer to the positioning methods shown in FIG. 3 to FIG. 5.

It should be understood that, the memory mentioned in embodiments of this application may be a volatile memory or a non-volatile memory, or may include both a volatile memory and a non-volatile memory. The non-volatile memory may be a hard disk drive (hard disk drive, HDD), a solid-state drive (solid-state drive, SSD), a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example and not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). The memory is any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store the program instructions and/or the data.

It should be further understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be noted that when the processor is a general-purpose processor, a DSP, an ASIC, an FPGA or another programmable logic device, a discrete gate or a transistor logic device, or a discrete hardware component, the memory (storage module) is integrated into the processor.

It should be noted that the memory described in this specification aims to include but is not limited to these memories and any memory of another proper type.

It should be understood that sequence numbers of the foregoing processes do not mean execution sequences in various embodiments of this application. The execution sequence of the processes should be determined according to functions and internal logic of the processes, and should not be construed as any limitation on the implementation processes of embodiments of this application.

Persons of ordinary skill in the art may be aware that, in combination with the examples described in embodiments provided in this specification, units and algorithm steps may be implemented by electronic hardware or a combination of computer software and electronic hardware. Whether the functions are performed by hardware or software depends on particular applications and design constraint conditions of the technical solutions. Persons skilled in the art may use different methods to implement the described functions for each particular application, but it should not be considered that the implementation goes beyond the scope of this application.

It may be clearly understood by persons skilled in the art that, for a purpose of convenient and brief description, for a detailed working process of the foregoing described system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a ROM, a RAM, a magnetic disk, or an optical disc.

A sequence of the steps of the method in embodiments of this application may be adjusted, combined, or removed based on an actual requirement.

Merging, division, and removing may be performed on the modules/units in the apparatus in embodiments of this application based on an actual requirement.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A positioning method, comprising:
receiving location information from a terminal device;
sending a first request to a location and mobility management function LMF network element, wherein the first request is for requesting to authenticate whether a location corresponding to the location information is a legal location;
receiving, from the LMF network element, first information indicating that authentication on the location corresponding to the location information is completed; and
sending, to the terminal device, second information indicating that the location corresponding to the location information is a legal location/an illegal location.

2. The method according to claim 1, wherein the sending, to the terminal device, second information indicating that the location corresponding to the location information is a legal location comprises:
when an error between a first location and the location corresponding to the location information is less than a threshold, sending, to the terminal device, the second information indicating that the location corresponding to the location information is a legal location, wherein the first location is a location of the terminal device that is determined when an access network of the terminal device is a non-terrestrial network NTN.

3. The method according to claim 1, wherein the sending, to the terminal device, second information indicating that the location corresponding to the location information is an illegal location comprises:
when an error between a first location and the location corresponding to the location information is greater than or equal to a threshold, sending, to the terminal device, the second information indicating that the location corresponding to the location information is an illegal location, wherein the first location is a location of the terminal device that is determined when an access network of the terminal device is a non-terrestrial network NTN; and
terminating a current service of the terminal device.

4. The method according to any one of claims 1 to 3, wherein the location information is carried in one or more of radio resource control RRC setup complete information, an initial user equipment UE message, or a UE capability message.

5. The method according to any one of claims 1 to 4, wherein the first request is triggered by an initial context setup complete message.

6. The method according to any one of claims 1 to 4, wherein the first request is triggered by the initial UE message.

7. The method according to any one of claims 2 to 6, wherein the method further comprises:
sending configuration information to the terminal device, wherein the configuration information is for configuring a plurality of pieces of time and/or a plurality of bandwidth parts BWPs; and
receiving a plurality of reference signals from the terminal device, wherein the plurality of reference signals are sent by the terminal device based on the configuration information.

8. The method according to claim 7, wherein time-frequency resources, patterns, or periodicities corresponding to the plurality of pieces of time are different.

9. The method according to claim 7 or 8, wherein time-frequency resources, patterns, or periodicities corresponding to the plurality of BWPs are different.

10. The method according to any one of claims 7 to 9, wherein the configuration information further comprises satellite ephemeris information.

11. A positioning method, comprising:
sending location information to a first core network element; and
receiving, from the first core network element, second information indicating that a location corresponding to the location information is a legal location/an illegal location.

12. The method according to claim 11, wherein the location information is carried in one or more of radio resource control RRC setup complete information, an initial user equipment UE message, or a UE capability message.

13. The method according to claim 12, wherein the method further comprises:
receiving configuration information from the first core network element, wherein the configuration information is for configuring a plurality of pieces of time and/or a plurality of bandwidth parts BWPs; and
sending a plurality of reference signals to the first core network element based on the configuration information.

14. The method according to claim 13, wherein time-frequency resources, patterns, or periodicities corresponding to the plurality of pieces of time are different.

15. The method according to claim 13 or 14, wherein time-frequency resources, patterns, or periodicities corresponding to the plurality of BWPs are different.

16. The method according to any one of claims 13 to 15, wherein the configuration information further comprises satellite ephemeris information.

17. A positioning method, comprising:
receiving a first request from a first core network element, wherein the first request is for requesting to authenticate whether a location corresponding to location information is a legal location, and the location information is from a terminal device; and
sending, to the first core network element, first information indicating that authentication on the location corresponding to the location information is completed.

18. The method according to claim 17, wherein the location information is carried in one or more of radio resource control RRC setup complete information, an initial user equipment UE message, or a UE capability message.

19. The method according to claim 17 or 18, wherein the first request is triggered by an initial context setup complete message.

20. The method according to claim 17 or 18, wherein the first request is triggered by the initial UE message.

21. The method according to any one of claims 17 to 20, wherein the method further comprises:
receiving a plurality of reference signals from the terminal device, wherein the plurality of reference signals are sent by the terminal device based on configuration information; and
when an access network of the terminal device is an NTN, determining a first location based on at least one of quality, distances, and angles of the plurality of reference signals.

22. A positioning apparatus, comprising a unit configured to perform the method according to any one of claims 1 to 10, a unit configured to perform the method according to any one of claims 11 to 16, or a unit configured to perform the method according to any one of claims 17 to 21.

23. A positioning apparatus, comprising a processor, wherein the processor is configured to execute instructions stored in a memory, and when the instructions are executed, the method according to any one of claims 1 to 21 is implemented.

24. The positioning apparatus according to claim 23, further comprising one or more of the memory and a transceiver, wherein the transceiver is configured to receive and send data and/or signaling.

25. A computer-readable storage medium, wherein the computer-readable storage medium stores a computer program or computer instructions, and when the computer program or the computer instructions are executed by a processor, the method according to any one of claims 1 to 21 is implemented.

26. A computer program product comprising instructions, wherein when the instructions are run on a computer, the method according to any one of claims 1 to 21 is performed.

27. A chip system, comprising at least one processor, a memory, and an interface circuit, wherein the memory, the interface circuit, and the at least one processor are interconnected through a line, and the at least one memory stores instructions; and when the instructions are executed by the processor, the method according to any one of claims 1 to 21 is implemented.

28. A communication system, comprising a core network device configured to perform the method according to any one of claims 1 to 10 and 17 to 21, and a terminal device configured to perform the method according to any one of claims 11 to 16.
